# FASCICULE DE BREVET EUROPEEN

(11) **EP 2 813 400 B1**
(45) Date de publication et mention de la délivrance du brevet: **02.08.2017**
(21) Numéro de dépôt: 14171698.5
(22) Date de dépôt: 10.06.2014
(51) Int. Cl.: B60R 21/0132, B60R 21/231

(54) **Équipement de véhicule adapté pour être monté de manière amovible dans un véhicule et véhicule comprenant un tel équipement de véhicule**
Fahrzeugausstattung, die zur herausnehmbaren Montage in ein Fahrzeug geeignet ist, und Fahrzeug, das eine solche Fahrzeugausstattung umfasst
Vehicle device capable of being removably mounted in a vehicle and vehicle including such a vehicle device

(30) Priorité: 10.06.2013 FR 1355319
(43) Date de publication de la demande: 17.12.2014
(73) Titulaire: Helite, 21380 Messigny et Vantoux (FR)
(72) Inventeur: Quarrey, Alexandre, 21380 Messigny et Vantoux (FR); Honore, Valentin, 05100 Briacon (FR); Thevenot, Gérard, 21380 Messigny et Vantoux (FR)
(74) Mandataire: Cabinet Plasseraud

(56) Documents cités:
- WO-A1-2013/107951
- US-A- 3 930 667
- US-A1- 2003 001 378
- US-A1- 2011 237 194

## Description

L'invention se rapporte à un équipement de véhicule adapté pour être monté de manière amovible dans un véhicule et à un véhicule comprenant un tel équipement de véhicule.

En particulier, l'invention se rapporte à un équipement de véhicule adapté pour être monté de manière amovible dans un véhicule au voisinage d'un emplacement destiné à recevoir un utilisateur, l'équipement de véhicule étant différent d'un siège-auto pour enfant.

Un tel équipement de véhicule est destiné à être monté et démonté de façon répétée, le cas échéant dans des véhicules différents.

Afin d'assurer une protection efficace de l'utilisateur dans une situation d'accident en dépit des montages et démontages répétés et quel que soit le véhicule dans lequel il est monté, l'équipement de véhicule comprend un système actif de protection. Le système actif de protection présente alors un état de protection dans lequel il est adapté pour assurer une protection de l'utilisateur. Par exemple, dans l'état de protection d'un système actif de protection de type coussin gonflable, le coussin gonflable peut être déployé. Ou encore, dans l'état de protection d'un système actif de protection de type sangle de sécurité couplée à un dispositif de tension, le dispositif de tension peut bloquer ou tendre la sangle de sécurité. En dehors de toute situation d'accident, le système actif de protection est dans un état de repos. Par exemple, dans l'état de repos du système actif de protection de type coussin gonflable, le coussin gonflable peut être replié. Dans l'état de repos du système actif de protection de type sangle de sécurité couplée à un dispositif de tension, le dispositif de tension peut laisser libre la sangle de sécurité notamment pour en permettre un réglage.

L'équipement de véhicule comprend également un système d'actionnement du système actif de protection pour le faire passer de l'état de repos à l'état de protection. Le système d'actionnement comprend généralement un dispositif de déclenchement qui comporte une source d'alimentation électrique, une unité centrale électronique reliée à la source d'alimentation et au système actif de protection, et au moins un capteur électronique connecté à l'unité centrale. Le dispositif de déclenchement présente un état actif dans lequel le capteur est adapté pour mesurer un paramètre de circulation du véhicule, tel qu'une accélération, variant en fonction de conditions de circulation du véhicule, et l'unité centrale est adaptée pour faire passer le système actif de protection de l'état de repos à l'état de protection lorsque le paramètre de circulation dépasse un seuil de déclenchement représentatif d'une situation d'accident.

Un système d'actionnement de ce type, adapté pour déclencher un système actif de protection à coussin gonflable lorsque l'accélération dépasse un seuil de déclenchement, est notamment décrit dans le document US 2011/0237194.

Pour assurer l'autonomie d'un tel équipement de véhicule, la source d'alimentation électrique est propre à l'équipement de véhicule et, en particulier, indépendante de la source d'alimentation du véhicule, et notamment de la batterie.

Or le système d'actionnement des équipements de véhicule connus consomme une quantité d'énergie électrique importante nécessitant d'augmenter la capacité, et donc l'encombrement et le coût, de la source d'alimentation.

L'invention vise à pallier les problèmes évoqués ci-dessus.

A cet effet, selon un premier aspect, l'invention propose un équipement de véhicule adapté pour être monté de manière amovible dans un véhicule au voisinage d'un emplacement destiné à recevoir un utilisateur, l'équipement de véhicule étant différent d'un siège-auto pour enfant, l'équipement de véhicule comprenant :
- un système actif de protection présentant un état de protection dans lequel ledit système actif de protection est adapté pour assurer une protection de l'utilisateur dans une situation d'accident, le système actif de protection étant dans un état de repos en dehors de toute situation d'accident,
- un système d'actionnement comprenant un dispositif de déclenchement qui comporte une source d'alimentation électrique, une unité centrale électronique reliée à la source d'alimentation et au système actif de protection, et au moins un capteur électronique connecté à l'unité centrale, le dispositif de déclenchement présentant un état actif dans lequel le capteur est adapté pour mesurer un paramètre de circulation du véhicule variant en fonction de conditions de circulation du véhicule, et l'unité centrale est adaptée pour faire passer le système actif de protection de l'état de repos à l'état de protection lorsque le paramètre de circulation dépasse un seuil de déclenchement représentatif d'une situation d'accident,
dans lequel le dispositif de déclenchement présente un état inactif dans lequel ledit dispositif de déclenchement se trouve tant que le paramètre de circulation est inférieur à un seuil d'activation, le seuil d'activation étant inférieur au seuil de déclenchement,
et dans lequel le système d'actionnement comprend un dispositif d'activation adapté pour détecter un dépassement du seuil d'activation par le paramètre de circulation, et pour faire passer le dispositif de déclenchement de l'état inactif à l'état actif lorsque le paramètre de circulation dépasse le seuil d'activation.

En particulier, dans l'état actif, le dispositif de déclenchement a une première consommation électrique et, dans l'état inactif, le dispositif de déclenchement a une deuxième consommation électrique inférieure à la première consommation électrique.

Ainsi, l'équipement de véhicule selon l'invention met en oeuvre un dispositif d'activation qui ne réveille le dispositif de déclenchement que lorsqu'un premier seuil, dit d'activation, est dépassé. Le dispositif d'activation dont la seule fonction est de réveiller le dispositif de déclenchement consomme peu ou pas d'énergie électrique. De plus, le dispositif de déclenchement peut être maintenu inactif dans bon nombre de situations qui ne sont pas des situations d'accidents, et être mis en alerte uniquement à des moments opportuns pour identifier une situation d'accident. Ces dispositions limitent la consommation d'énergie du système d'actionnement et permettent de réduire l'encombrement et le coût de la source d'alimentation électrique.

Le dispositif de déclenchement peut être adapté pour mesurer une durée au cours de laquelle ledit dispositif de déclenchement est dans l'état actif, et pour passer de l'état actif à l'état inactif lorsque la durée dépasse une durée d'activation déterminée. Le système d'actionnement peut ainsi mettre en oeuvre une temporisation permettant d'analyser l'évolution de la situation avant de repasser dans l'état inactif.

Le dispositif d'activation peut comprendre un capteur inertiel et un connecteur relié au dispositif de déclenchement, le capteur inertiel comportant un organe d'activation sollicité vers une position éloignée à distance du connecteur, et déplaçable vers une position d'activation dans laquelle ledit organe d'activation est en contact avec le connecteur de manière à faire passer le dispositif de déclenchement de l'état inactif à l'état actif, le capteur inertiel étant adapté pour que l'organe d'activation soit dans la position d'activation lorsque le paramètre de circulation dépasse le seuil d'activation. Le dispositif d'activation peut ainsi être entièrement mécanique ne nécessitant aucune énergie électrique de sorte que l'ensemble du système d'actionnement ne consomme pas d'énergie électrique dans l'état inactif du dispositif de déclenchement. Ces dispositions permettent en outre d'assurer une activation fiable du dispositif de déclenchement et d'obtenir un dispositif d'activation facilement adaptable et remplaçable.

En variante, le dispositif d'activation peut comprendre un accéléromètre électronique basse consommation adapté pour mesurer une accélération du véhicule comme paramètre de circulation.

Par ailleurs, le capteur du dispositif de déclenchement peut être un accéléromètre électronique adapté pour mesurer une accélération du véhicule comme paramètre de circulation. L'accéléromètre du dispositif de déclenchement peut constituer le dispositif d'activation de telle manière que le dispositif d'activation est intégré au dispositif de déclenchement. Selon de telles dispositions, le dispositif de déclenchement dans l'état inactif présente une fonctionnalité limitée à la seule détection du dépassement du seuil d'activation par le paramètre de circulation au moyen de l'accéléromètre. Le dispositif de déclenchement présente alors dans l'état inactif une consommation électrique minimale. Le dispositif de déclenchement dans l'état actif peut présenter, en plus de la fonctionnalité relative à la détection du dépassement du seuil de déclenchement par le paramètre de circulation au moyen de l'accéléromètre, une pluralité d'autres fonctionnalités telles que l'enregistrement de données relatives au paramètre de circulation ou autres, la transmission de ces données vers un système de traitement extérieur au système d'actionnement, etc. Le dispositif de déclenchement présente alors dans l'état actif une consommation électrique supérieure à la consommation électrique minimale de l'état inactif.

Dans un mode de réalisation particulier, le système actif de protection peut comprendre au moins un coussin gonflable, le coussin gonflable étant replié dans l'état de repos du système actif de protection, et déployé dans l'état de protection du système actif de protection.

De façon complémentaire ou alternative, le système actif de protection peut comprendre un moins une sangle de sécurité et un dispositif de tension adapté pour laisser libre la sangle de sécurité dans l'état de repos du système actif de protection, et pour bloquer ou tendre la sangle de sécurité dans l'état de protection du système actif de protection.

Afin d'éviter que le système actif de protection ne se déclenche à des moments inopportuns, et par exemple lors d'une chute ou d'un choc de l'équipement de véhicule manipulé indépendamment du véhicule, la comparaison du paramètre de circulation au seuil de déclenchement peut être combinée à une détection d'un ou plusieurs autres paramètres pour faire passer le système actif de protection de l'état de repos à l'état de protection. Il est ainsi possible de prévenir tout déclenchement intempestif du système actif de protection risquant de rendre l'équipement de véhicule au moins momentanément inutilisable ou de blesser l'utilisateur.

En particulier, le système d'actionnement peut comprendre au moins un capteur de présence connecté à l'unité centrale du dispositif de déclenchement et adapté pour détecter une présence de l'utilisateur sur l'emplacement, l'unité centrale étant adaptée pour faire passer le système actif de protection de l'état de repos à l'état de protection en outre lorsque la présence de l'utilisateur sur l'emplacement est détectée.

De façon complémentaire ou alternative, le système d'actionnement peut comprendre au moins un capteur de fixation connecté à l'unité centrale du dispositif de déclenchement et adapté pour détecter une fixation de l'équipement de véhicule au véhicule, l'unité centrale étant adaptée pour faire passer le système actif de protection de l'état de repos à l'état de protection en outre lorsque la fixation de l'équipement de véhicule au véhicule est détectée.

Selon un deuxième aspect, l'invention concerne un véhicule comprenant un équipement de véhicule tel que défini précédemment monté de manière amovible dans le véhicule au voisinage d'un emplacement destiné à recevoir un utilisateur.

D'autres objets et avantages de l'invention apparaîtront à la lecture de la description qui suit d'un mode de réalisation particulier de l'invention donné à titre d'exemple non limitatif, la description étant faite en référence aux dessins annexés dans lesquels :
- la figure 1 est une représentation d'un véhicule de type ULM (ultra léger motorisé) dans lequel un siège selon un mode de réalisation de l'invention est monté de manière amovible, le siège étant équipé d'un système actif de protection et d'un système d'actionnement,
- la figure 2 est une représentation du siège séparé du véhicule de la figure 1,
- la figure 3 est une représentation schématique du système d'actionnement équipant le siège de la figure 2,
- les figures 4 et 5 sont respectivement un diagramme et un graphe illustrant un mode de fonctionnement du système actif de protection et du système d'actionnement du siège de la figure 2.

Sur les figures, les mêmes références désignent des éléments identiques ou analogues.

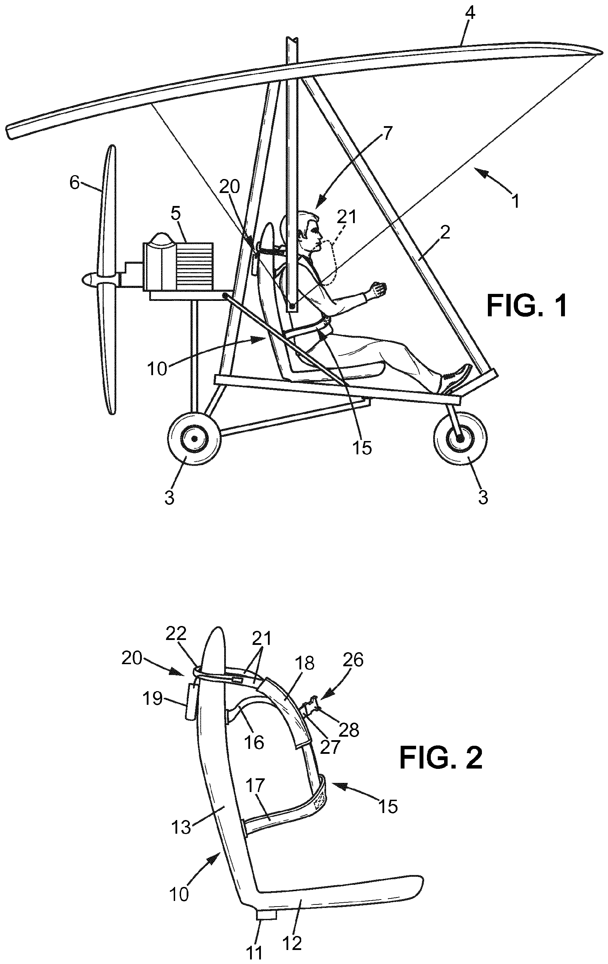

La figure 1 représente une vue de côté d'un aéronef 1 de type ultra léger motorisé, communément désigné par le terme ULM, comprenant un châssis 2 monté sur des roues 3 et portant une aile 4 et un moteur 5 relié à une hélice 6 propulsive. L'ULM comprend également un siège 10 apte à recevoir un utilisateur 7, pilote ou passager, âgé de plus de 10 ans.

Le siège 10, représenté plus en détail sur la figure 2, est monté de manière amovible sur l'ULM 1. Un système d'accrochage réversible 11 approprié, par exemple par vissage, encliquetage ou autre, est alors prévu pour coopérer avec le châssis 2 de l'ULM 1. Le siège 10 comprend une assise 12 et un dossier 13 sur lequel un harnais 15 est fixé pour maintenir l'utilisateur 7 en position assise. En variante, tout autre agencement du harnais 15 pourrait être prévu.

Pour protéger l'utilisateur 7 contre des chocs ou des accidents que l'ULM 1 pourrait subir, le harnais 15 est équipé d'un système actif de protection 20 présentant un état de repos dans lequel il se trouve en dehors de toute situation d'accident, et un état de protection dans lequel il est adapté pour assurer une protection de l'utilisateur 7 dans une situation d'accident.

Dans le mode de réalisation représenté sur la figure 2, le harnais 15 et le système actif de protection 20 sont du type de ceux décrits dans la demande de brevet PCT/FR2012/050098.

En particulier, le harnais 15 peut comprendre des première et deuxième bretelles 16 verticale, dont une seule est visible sur la figure 2, pour maintenir les épaules de l'utilisateur 7, ainsi qu'une ceinture ventrale 17 pour maintenir le bassin de l'utilisateur 7. Le système actif de protection 20 comprend alors un premier coussin gonflable 21 qui, dans l'état de repos du système actif de protection 20, est replié dans un premier étui 18 monté sur la première bretelle 16. De manière analogue, un deuxième coussin gonflable 21 est replié dans un deuxième étui monté sur la deuxième bretelle, dans l'état de repos du système actif de protection 20. Dans le mode de réalisation représenté, les premier et deuxième coussins gonflables 21 sont reliés l'un à l'autre par une portion de liaison 22 entourant le dossier 13 du siège 10.

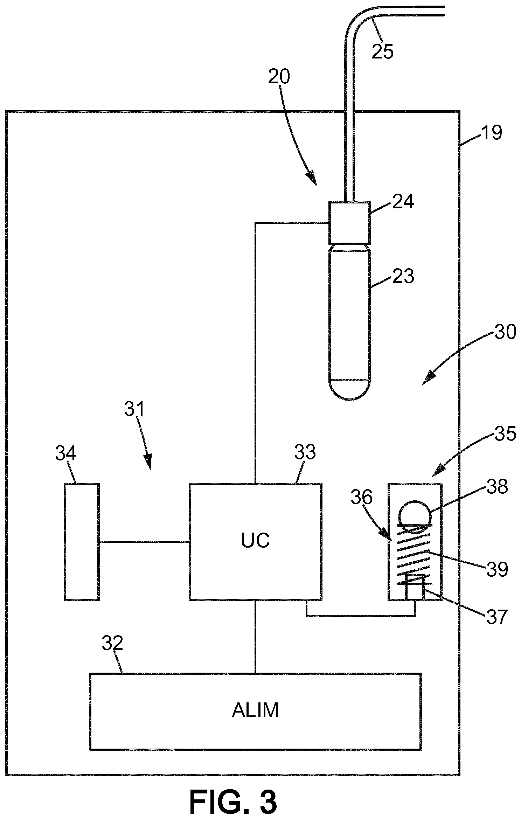

Comme représenté sur les figures 2 et 3, le système actif de protection 20 comprend également un réservoir de gaz 23 et un actionneur 24, mécanique, pyrotechnique ou autre, disposés dans un boîtier 19 solidaire du siège 10 et, en particulier, du dossier 13 du siège 10. L'actionneur 24 est adapté pour mettre en communication le réservoir de gaz 23 et les premier et deuxième coussins gonflables 21 par exemple par l'intermédiaire d'un tuyau flexible 25. Comme représenté en pointillé sur la figure 1, chacun des premier et deuxième coussins gonflables 21 peut ainsi, dans l'état de protection du système actif de protection 20, être déployé pour s'interposer entre l'utilisateur 7 et des objets ou obstacles que l'utilisateur 7 pourrait heurter, ou pour retenir l'utilisateur 7.

Comme décrit dans la demande de brevet PCT/FR2012/050098, les premier et deuxième coussins gonflables 21 peuvent notamment se déployer vers le haut, en direction l'un de l'autre ainsi que vers l'avant et sur les côtés. Les premier et deuxième coussins gonflables 21 peuvent, par exemple, venir au contact l'un de l'autre dans une région situé devant le visage de l'utilisateur 7. Pour empêcher les premier et deuxième coussins gonflables 21 de s'écarter l'un de l'autre, le harnais 15 peut alors comprendre un dispositif de liaison 26 reliant directement les premier et deuxième coussins gonflables 21. En variante, le dispositif de liaison 26 pourrait relier les première et deuxième bretelles 16 de toute autre manière appropriée, à distance de la ceinture ventrale 17. Le dispositif de liaison 26 peut notamment comprendre des première et deuxième portions de sangle 27 attachées respectivement aux premier et deuxième coussins gonflables 21, et pourvues respectivement d'un organe de clipsage femelle 28 et d'un organe de clipsage mâle, non représenté, adaptés pour être verrouillés l'un à l'autre de manière réversible. Les premier et deuxième coussins gonflables 21 sont adaptés pour se déformer, et notamment se dégonfler, après avoir été déployés pour absorber une partie de l'énergie du choc et ainsi l'amortir.

De façon complémentaire ou alternative, le système actif de protection 20 pourrait comprendre une ou plusieurs sangles de sécurité, constituant par exemple l'une et/ou l'autre des première et deuxième bretelles 16 et/ou la ceinture ventrale 17 du harnais 15, et un dispositif de tension adapté pour laisser libre la sangle de sécurité dans l'état de repos du système actif de protection 20, et pour bloquer ou tendre la sangle de sécurité dans l'état de protection du système actif de protection 20.

Pour assurer le déploiement des premier et deuxième coussins gonflables 21 dans une situation d'accident, le siège 10 comprend un système d'actionnement 30 disposé dans le boîtier 19.

Le système d'actionnement 30, représenté schématiquement sur la figure 3, comprend un dispositif de déclenchement 31 comportant une source d'alimentation 32 électrique, une unité centrale 33 électronique reliée à la source d'alimentation 32 et à l'actionneur 24 du système actif de protection 20, et au moins un capteur 34 électronique connecté à l'unité centrale 33. Le capteur 34 est adapté pour mesurer un paramètre de circulation Pc de l'ULM 1 variant en fonction de conditions de circulation de l'ULM 1. Dans un mode de réalisation particulier, le capteur 34 du dispositif de déclenchement 31 est un accéléromètre électronique adapté pour mesurer une accélération de l'ULM 1 comme paramètre de circulation Pc. Le dispositif de déclenchement 31 peut également comprendre d'autres composants adaptés pour ajouter des fonctionnalités à la fonctionnalité relative à la mesure du paramètre de circulation Pc, à savoir, dans le mode de réalisation représenté, l'accélération. Le dispositif de déclenchement 31 peut, par exemple, comprendre une mémoire reliée à l'unité centrale 33 notamment pour enregistrer des données relatives au paramètre de circulation Pc, telles que son évolution au cours du temps, ou à d'autres paramètres mesurés par d'autres capteurs reliés à l'unité centrale 33. Le dispositif de déclenchement 31 peut également comprendre une interface de communication reliée à l'unité centrale pour communiquer de manière filaire ou sans fil les données mesurées à un système de traitement extérieur au système d'actionnement.

Pour limiter la consommation d'énergie du système d'actionnement 30, le dispositif de déclenchement 31 présente un état inactif dans lequel l'unité centrale 33 et le capteur 34 ne sont pas ou peu alimentés en énergie électrique et dans lequel il est maintenu tant que l'accélération Pc n'a pas dépassé un seuil d'activation Sa, par exemple compris entre 2 g et 6 g, notamment compris entre 2 g et 3 g. La consommation d'énergie électrique du dispositif de déclenchement dans cet état inactif est alors faible, voire nulle. Une fois le seuil d'activation Sa dépassé, le dispositif de déclenchement 31 est mis en alerte dans un état actif dans lequel l'unité centrale 33 et le capteur 34 sont alimentés en énergie électrique de sorte à pouvoir détecter une situation d'accident et déclencher le déploiement des premier et deuxième coussins gonflables 21 si l'accélération Pc dépasse un nouveau seuil dit de déclenchement Sd, supérieur au seuil d'activation Sa et représentatif d'une situation d'accident. Le seuil de déclenchement Sd est, par exemple, supérieur à 8 g, notamment compris entre 10 g et 12 g. La consommation d'énergie électrique du dispositif de déclenchement dans cet état actif est plus importante que dans l'état inactif.

Le système d'actionnement 30 comprend alors également un dispositif d'activation 35 adapté pour détecter l'instant où l'accélération Pc dépasse le seuil d'activation Sa, et pour faire passer le dispositif de déclenchement 31 de l'état inactif à l'état actif à cet instant.

Dans un mode de réalisation, le dispositif d'activation 35 est entièrement mécanique et comprend un capteur inertiel 36 et un connecteur 37 relié à l'unité centrale 33 du dispositif de déclenchement 31. Le capteur inertiel 36 comporte alors un organe d'activation, tel qu'une masselotte 38, sollicité, par exemple par un ressort hélicoïdal 39, vers une position éloignée à distance du connecteur 37. La masselotte 38 est déplaçable vers une position d'activation dans laquelle elle est en contact avec le connecteur 37 de manière à faire passer le dispositif de déclenchement 31 de l'état inactif à l'état actif. La masselotte 38 et le ressort 39 sont dimensionnés pour que la masselotte 38 vienne, sous l'effet des forces d'inertie, dans la position d'activation lorsque l'accélération Pc dépasse le seuil d'activation Sa.

Dans un autre mode de réalisation, le dispositif d'activation 35 pourrait comprendre un accéléromètre électronique basse consommation, par exemple inférieure à 400 µA et en particulier inférieure à 200 µA, relié à l'unité centrale 33 du dispositif de déclenchement 31 et adapté pour mesurer une accélération du véhicule inférieure à 3 g ou 4 g. En particulier, l'accéléromètre 34 du dispositif de déclenchement 31 peut constituer le dispositif d'activation 35. Le dispositif d'activation 35 se trouve ainsi intégré au dispositif de déclenchement 31. Dans l'état inactif du dispositif de déclenchement 31, les composants du dispositif de déclenchement 31 autres que l'accéléromètre 34 sont maintenus en veille de manière à limiter les fonctionnalités du dispositif de déclenchement 31 à la seule fonctionnalité du dispositif d'activation 35 relative à la détection du dépassement du seuil d'activation Sa par le paramètre de circulation Pc. Dans l'état actif du dispositif de déclenchement 31, l'ensemble des composants, ou au moins un plus grand nombre de composants, du dispositif de déclenchement 31 peuvent être actifs de telle manière que le dispositif de déclenchement 31 présente, outre la détection du dépassement du seuil de déclenchement Sd par le paramètre de circulation Pc, un ensemble de fonctionnalités parmi lesquelles l'enregistrement de données relatives notamment au paramètre de circulation dans la mémoire et/ou la transmission de ces données vers un système de traitement extérieur au système d'actionnement, etc. La consommation d'énergie électrique du dispositif de déclenchement 31 dans l'état actif est plus importante que, dans l'état inactif de telle manière que dans l'état inactif du dispositif de déclenchement 31, le système d'actionnement présente globalement une consommation électrique minimale.

Dans d'autres modes de réalisation, le dispositif d'activation 35 pourrait comprendre tout type de capteur approprié, tel qu'un gyroscope, un GPS ou autre.

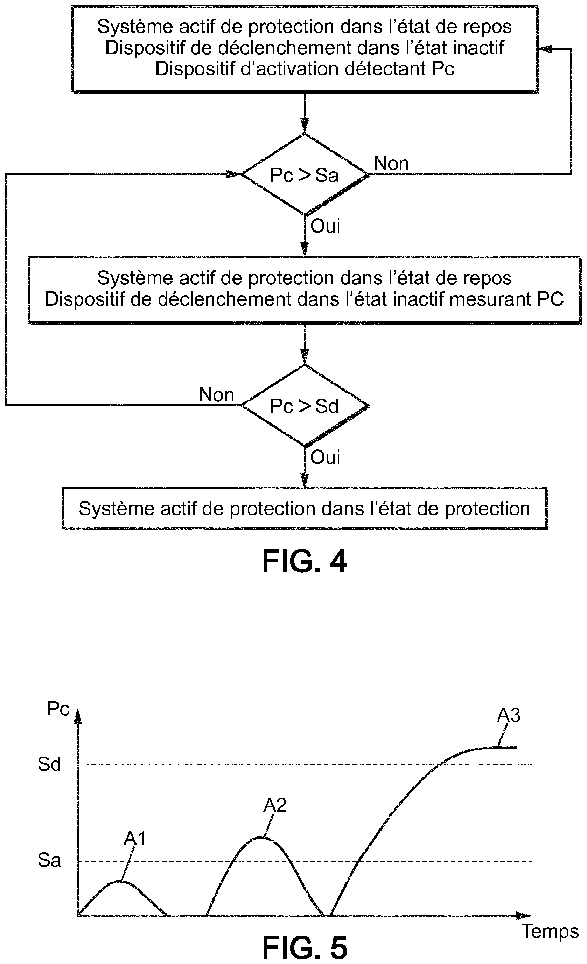

Sur les figures 4 et 5, un mode de fonctionnement du système d'actionnement 30 est décrit.

Dans un état initial, le système actif de protection 20 est dans l'état de repos et le dispositif de déclenchement 31 est dans l'état inactif.

Lors d'une première accélération A1, le capteur inertiel 36 du dispositif d'activation 35 ne détecte pas de dépassement du seuil d'activation Sa. Le système actif de protection 20 reste dans l'état de repos et le dispositif de déclenchement 31 reste dans l'état inactif.

Lors d'une deuxième accélération A2 dépassant le seuil d'activation Sa, la masselotte 38 du capteur inertiel 36 vient en contact avec le connecteur 37 et le dispositif de déclenchement 31 est mis dans l'état actif alors que le système actif de protection 20 reste dans l'état de repos. Le dispositif de déclenchement 31 en alerte peut analyser la situation, l'accéléromètre 34 mesurant l'accélération Pc de l'ULM 1 et l'unité centrale 33 comparant l'accélération Pc au seuil de déclenchement Sd. L'accélération Pc passe à nouveau sous le seuil d'activation Sa faisant retourner le dispositif de déclenchement 31 à l'état inactif.

Il est possible de prévoir une temporisation avant d'autoriser le retour à l'état inactif pour le dispositif de déclenchement 31. Le dispositif de déclenchement 31 peut alors comprendre une horloge adaptée pour mesurer une durée au cours de laquelle le dispositif de déclenchement 31 est dans l'état actif, et pour passer le dispositif de déclenchement 31 de l'état actif à l'état inactif, en coupant l'alimentation de l'unité centrale 33 et du capteur 34, lorsque la durée dépasse une durée d'activation déterminée.

Lors d'une troisième accélération A3 dépassant d'abord le seuil d'activation Sa, le dispositif de déclenchement 31 est mis dans l'état actif alors que le système actif de protection 20 reste dans l'état de repos. L'accéléromètre 34 du dispositif de déclenchement 31 peut mesurer l'accélération Pc de l'ULM 1 et l'unité centrale 33 peut comparer l'accélération Pc au seuil de déclenchement Sd. Lorsque l'unité centrale 33 détecte que l'accélération Pc dépasse ensuite le seuil de déclenchement Sd, elle fait passer le système actif de protection 20 de l'état de repos à l'état de protection dans lequel les premier et deuxième coussins gonflables 21 sont déployés devant l'utilisateur 7.

Pour éviter que les premier et deuxième coussins gonflables 21 ne se déploient lorsque le siège 10 n'est pas occupé par l'utilisateur 7 ou lorsque le siège est démonté de l'ULM 1, par exemple lorsque le siège 10 chute ou subit un choc, il est possible de conditionner le déclenchement du système actif de protection 20 à la combinaison de la détection du dépassement d'un seuil de déclenchement Sd à d'autres critères.

A cet effet, le système d'actionnement 30 peut comprendre un ou plusieurs capteurs de présence adaptés pour détecter une présence de l'utilisateur 7 au voisinage de l'emplacement de l'ULM 1 destiné à recevoir l'utilisateur 7. Le capteur de présence, par exemple placés sur l'assise 12 du siège 10, est connecté à l'unité centrale 33 du dispositif de déclenchement 31 de telle sorte que l'unité centrale 33 ne fait passer le système actif de protection 20 de l'état de repos à l'état de protection que lorsque l'accélération Pc dépasse le seuil de déclenchement Sd et que la présence de l'utilisateur 7 au niveau de l'emplacement est détectée. D'autres capteurs, permettant par exemple de détecter un verrouillage du harnais 15, pourraient être prévus pour sécuriser le fonctionnement du système d'actionnement 30 vis-à-vis des déclenchements intempestifs.

De façon complémentaire ou alternative, un ou plusieurs capteurs de fixation adaptés pour détecter une fixation du siège 10 à l'ULM 1 peuvent être prévus. Le capteur de fixation, par exemple monté sur le système d'accrochage 11 du siège 10, est connecté à l'unité centrale 33 du dispositif de déclenchement 31 de telle sorte que l'unité centrale 33 ne fait passer le système actif de protection 20 de l'état de repos à l'état de protection que lorsque l'accélération Pc dépasse le seuil de déclenchement Sd et que la fixation du siège 10 à l'ULM 1 est détectée.

Bien que décrite en relation avec un siège 10 monté dans un ULM 1, l'invention s'applique à tout type de véhicule qu'il soit aérien, comme un ULM, un avion, un hélicoptère ou autre, ou terrestre, comme un deux-roues ou un tricycle motorisé, un véhicule de type quad ou kart, une voiture, un camion, un autobus ou autre. L'invention s'applique par exemple à un siège d'une voiture de rallye, analogue au siège 10 précédemment décrit, destiné à être fréquemment monté et démonté de la voiture de rallye. L'invention s'applique également à tout type d'équipement de véhicule monté de manière amovible dans un véhicule au voisinage d'un emplacement destiné à recevoir un utilisateur, et pourvu d'un système actif de protection 20 et d'un système d'actionnement 30 qui lui sont propres. L'invention ne s'applique toutefois pas à un siège-auto pour enfant qui est exclu de la protection conférée par la présente demande de brevet.

## Revendications

1. Équipement de véhicule (10) adapté pour être monté de manière amovible dans un véhicule (1) au voisinage d'un emplacement destiné à recevoir un utilisateur (7), l'équipement de véhicule (10) étant différent d'un siège-auto pour enfant, l'équipement de véhicule (10) comprenant :
- un système actif de protection (20) présentant un état de protection dans lequel ledit système actif de protection (20) est adapté pour assurer une protection de l'utilisateur (7) dans une situation d'accident, le système actif de protection (20) étant dans un état de repos en dehors de toute situation d'accident,
- un système d'actionnement (30) comprenant un dispositif de déclenchement (31) qui comporte une source d'alimentation (32) électrique, une unité centrale (33) électronique reliée à la source d'alimentation (32) et au système actif de protection (20), et au moins un capteur (34) électronique connecté à l'unité centrale (33), le dispositif de déclenchement (31) présentant un état actif dans lequel le capteur (34) est adapté pour mesurer un paramètre de circulation (Pc) du véhicule (1) variant en fonction de conditions de circulation du véhicule (1), et l'unité centrale (33) est adaptée pour faire passer le système actif de protection (20) de l'état de repos à l'état de protection lorsque le paramètre de circulation (Pc) dépasse un seuil de déclenchement (Sd) représentatif d'une situation d'accident,
l'équipement de véhicule (10) étant **caractérisé en ce que** le dispositif de déclenchement (31) présente un état inactif dans lequel ledit dispositif de déclenchement (31) se trouve tant que le paramètre de circulation (Pc) est inférieur à un seuil d'activation (Sa), le seuil d'activation (Sa) étant inférieur au seuil de déclenchement (Sd),
et **en ce que** le système d'actionnement (30) comprend un dispositif d'activation (35) adapté pour détecter un dépassement du seuil d'activation (Sa) par le paramètre de circulation (Pc), et pour faire passer le dispositif de déclenchement (31) de l'état inactif à l'état actif lorsque le paramètre de circulation (Pc) dépasse le seuil d'activation (Sa).

2. Équipement de véhicule (10) selon la revendication 1, dans lequel le dispositif de déclenchement (31) est adapté pour mesurer une durée au cours de laquelle ledit dispositif de déclenchement (31) est dans l'état actif, et pour passer de l'état actif à l'état inactif lorsque la durée dépasse une durée d'activation déterminée.

3. Équipement de véhicule (10) selon l'une quelconque des revendications 1 à 2, dans lequel le dispositif d'activation (35) comprend un capteur inertiel (36) et un connecteur (37) relié au dispositif de déclenchement (31), le capteur inertiel (36) comportant un organe d'activation (38) sollicité vers une position éloignée à distance du connecteur (37), et déplaçable vers une position d'activation dans laquelle ledit organe d'activation (38) est en contact avec le connecteur (37) de manière à faire passer le dispositif de déclenchement (31) de l'état inactif à l'état actif, le capteur inertiel (36) étant adapté pour que l'organe d'activation (38) soit dans la position d'activation lorsque le paramètre de circulation (Pc) dépasse le seuil d'activation (Sa).

4. Équipement de véhicule (10) selon l'une quelconque des revendications 1 à 2, dans lequel le dispositif d'activation (35) comprend un accéléromètre électronique basse consommation adapté pour mesurer une accélération du véhicule comme paramètre de circulation (Pc).

5. Équipement de véhicule (10) selon l'une quelconque des revendications 1 à 4, dans lequel le capteur (34) du dispositif de déclenchement (31) est un accéléromètre électronique adapté pour mesurer une accélération du véhicule comme paramètre de circulation (Pc).

6. Équipement de véhicule (10) selon l'une quelconque des revendications 1 à 5, dans lequel le système actif de protection (20) comprend au moins un coussin gonflable (21), le coussin gonflable (21) étant replié dans l'état de repos du système actif de protection (20), et déployé dans l'état de protection du système actif de protection (20).

7. Équipement de véhicule (10) selon l'une quelconque des revendications 1 à 6, dans lequel le système actif de protection (20) comprend un moins une sangle de sécurité et un dispositif de tension adapté pour laisser libre la sangle de sécurité dans l'état de repos du système actif de protection (20), et pour bloquer ou tendre la sangle de sécurité dans l'état de protection du système actif de protection (20).

8. Équipement de véhicule (10) selon l'une quelconque des revendications 1 à 7, dans lequel le système d'actionnement (30) comprend au moins un capteur de présence connecté à l'unité centrale (33) du dispositif de déclenchement (31) et adapté pour détecter une présence de l'utilisateur (7) sur l'emplacement, l'unité centrale (33) étant adaptée pour faire passer le système actif de protection (20) de l'état de repos à l'état de protection en outre lorsque la présence de l'utilisateur (7) sur l'emplacement est détectée.

9. Équipement de véhicule (10) selon l'une quelconque des revendications 1 à 8, dans lequel le système d'actionnement (30) comprend au moins un capteur de fixation connecté à l'unité centrale (33) du dispositif de déclenchement (31) et adapté pour détecter une fixation de l'équipement de véhicule (10) au véhicule (1), l'unité centrale (33) étant adaptée pour faire passer le système actif de protection (20) de l'état de repos à l'état de protection en outre lorsque la fixation de l'équipement de véhicule (10) au véhicule (1) est détectée.

10. Véhicule (1) comprenant un équipement de véhicule (10) selon l'une quelconque des revendications 1 à 9 monté de manière amovible dans le véhicule (1) au voisinage d'un emplacement destiné à recevoir un utilisateur (7).

## Patentansprüche

1. Fahrzeugausrüstung (10), welche dazu eingerichtet ist, in lösbarer Weise an einem Fahrzeug (1) in der Nähe eines Sitzes montiert zu werden, welcher dazu vorgesehen ist, einen Benutzer (7) aufzunehmen, wobei die Fahrzeugausrüstung (10) von einem Auto-Kindersitz verschieden ist, wobei die Fahrzeugausrüstung (10) umfasst:
- ein aktives Schutzsystem (20), welches einen Schutzzustand aufweist, in welchem das aktive Schutzsystem (20) dazu eingerichtet ist, einen Schutz des Benutzers (7) in einer Unfallsituation sicherzustellen, wobei das aktive Schutzsystem (20) außerhalb jeder Unfallsituation in einem Ruhezustand ist,
- ein Betätigungssystem (30), welches eine Auslösevorrichtung (31) umfasst, welche eine elektrische Versorgungsquelle (32), eine elektronische Zentraleinheit (33), welche mit der Versorgungsquelle (32) und dem aktiven Schutzsystem (20) verbunden ist, und wenigstens einen elektronischen Sensor (34) umfasst, welcher mit der Zentraleinheit (33) verbunden ist, wobei die Auslösevorrichtung (31) einen aktiven Zustand aufweist, in welchem der Sensor (34) dazu eingerichtet ist, einen Fahrtparameter (Pc) des Fahrzeugs (1) zu messen, welcher als Funktion von Fahrtbedingungen des Fahrzeugs (1) variiert, und wobei die Zentraleinheit (33) dazu eingerichtet ist, das aktive Schutzsystem (20) von dem Ruhezustand in den Schutzzustand zu überführen, wenn der Fahrtparameter (Pc) eine Auslöseschwelle (Sd) übersteigt, welche eine Unfallsituation anzeigt,
wobei die Fahrzeugausrüstung (10) **dadurch gekennzeichnet ist, dass** die Auslösevorrichtung (31) einen inaktiven Zustand aufweist, in welchem sich die Auslösevorrichtung (31) befindet, solange der Fahrtparameter (Pc) kleiner als eine Aktivierungsschwelle (Sa) ist, wobei die Aktivierungsschwelle (Sa) kleiner als die Auslöseschwelle (Sd) ist,
und dass das Betätigungssystem (30) eine Aktivierungsvorrichtung (35) umfasst, welche dazu eingerichtet ist, ein Übersteigen der Aktivierungsschwelle (Sa) durch den Fahrtparameter (Pc) zu detektieren, sowie dazu, die Auslösevorrichtung (31) von dem inaktiven Zustand in den aktiven Zustand zu überführen, wenn der Fahrtparameter (Pc) die Aktivierungsschwelle (Sa) übersteigt.

2. Fahrzeugausrüstung (10) nach Anspruch 1, wobei die Auslösevorrichtung (31) dazu eingerichtet ist, eine Zeitspanne zu messen, während welcher die Auslösevorrichtung (31) in dem aktiven Zustand ist, sowie zum Überführen von dem aktiven Zustand in den inaktiven Zustand, wenn die Zeitspanne eine vorbestimmte Aktivierungszeitspanne übersteigt.

3. Fahrzeugausrüstung (10) nach einem der Ansprüche 1 bis 2, wobei die Aktivierungsvorrichtung (35) einen Trägheitssensor (36) und ein Verbindungselement (37) umfasst, welches mit der Auslösevorrichtung (31) verbunden ist, wobei der Trägheitssensor (36) ein Aktivierungsorgan (38) umfasst, welches in Richtung einer entfernten Position in einem Abstand von dem Verbindungselement (37) belastet ist und in Richtung einer Aktivierungsposition verlagerbar ist, in welcher das Aktivierungsorgan (38) in derartigem Kontakt mit dem Verbindungselement (37) ist, dass die Auslösevorrichtung (31) von dem inaktiven Zustand in den aktiven Zustand überführt wird, wobei der Trägheitssensor (36) so eingerichtet ist, dass das Betätigungsorgan (38) in der Aktivierungsposition ist, wenn der Fahrtparameter (Pc) die Aktivierungsschwelle (Sa) übersteigt.

4. Fahrzeugausrüstung (10) nach einem der Ansprüche 1 bis 2, wobei die Aktivierungsvorrichtung (35) einen elektronischen Beschleunigungssensor mit niedrigem Energieverbrauch umfasst, welcher dazu eingerichtet ist, eine Beschleunigung des Fahrzeugs als Fahrtparameter (Pc) zu messen.

5. Fahrzeugausrüstung (10) nach einem der Ansprüche 1 bis 4, wobei der Sensor (34) der Auslösevorrichtung (31) ein elektronischer Beschleunigungssensor ist, welcher dazu eingerichtet ist, eine Beschleunigung des Fahrzeugs als Fahrtparameter (Pc) zu messen.

6. Fahrzeugausrüstung (10) nach einem der Ansprüche 1 bis 5, wobei das aktive Schutzsystem (20) wenigstens einen Airbag (21) umfasst, wobei der Airbag (21) in dem Ruhezustand des aktiven Schutzsystems (20) zusammengefaltet ist, und in dem Schutzzustand des aktiven Schutzsystems (20) entfaltet ist.

7. Fahrzeugausrüstung (10) nach einem der Ansprüche 1 bis 6, wobei das aktive Schutzsystem (20) wenigstens einen Sicherheitsgurt und eine Spannvorrichtung umfasst, welche dazu eingerichtet ist, den Sicherheitsgurt in dem Ruhezustand des aktiven Schutzsystems (20) freizugeben und den Sicherheitsgurt in dem Schutzzustand des aktiven Sicherheitssystems (20) zu blockieren oder zu straffen.

8. Fahrzeugausrüstung (10) nach einem der Ansprüche 1 bis 7, wobei das Betätigungssystem (30) wenigstens einen Anwesenheitssensor umfasst, welcher mit der Zentraleinheit (33) der Auslösevorrichtung (31) verbunden und dazu eingerichtet ist, eine Anwesenheit des Benutzers (7) auf dem Sitz zu detektieren, wobei die Zentraleinheit (33) dazu eingerichtet ist, das aktive Schutzsystem (20) ferner von dem Ruhezustand in den Schutzzustand zu überführen, wenn die Anwesenheit des Benutzers (7) auf dem Sitz detektiert wird.

9. Fahrzeugausrüstung (10) nach einem der Ansprüche 1 bis 8, wobei das Betätigungssystem (30) wenigstens einen Befestigungssensor umfasst, welcher mit der Zentraleinheit (33) der Auslösevorrichtung (31) verbunden und dazu eingerichtet ist, eine Befestigung der Fahrzeugausrüstung (10) an dem Fahrzeug (1) zu detektieren, wobei die Zentraleinheit (33) dazu eingerichtet ist, das aktive Schutzsystem (20) ferner von dem Ruhezustand in den Schutzzustand zu überführen, wenn die Befestigung der Fahrzeugausrüstung (10) an dem Fahrzeug (1) detektiert wird.

10. Fahrzeug (1), umfassend eine Fahrzeugausrüstung (10) nach einem der Ansprüche 1 bis 9, welche in lösbarer Weise in dem Fahrzeug (1) in der Nähe eines Sitzes montiert ist, welcher dazu vorgesehen ist, einen Benutzer (7) aufzunehmen.

## Claims

1. Vehicle equipment (10) designed to be removably mounted in a vehicle (1) in the vicinity of a space intended to accommodate a user (7), the vehicle equipment (10) being different from a child's car seat, the vehicle equipment (10) comprising:
- an active protection system (20) having a protection mode in which said active protection system (20) is configured to afford protection for the user (7) in a situation involving an accident, the active protection system (20) being in a standby mode at times other than in a situation involving an accident,
- an actuating system (3) comprising a trigger device (31) having an electric power supply source (32), an electronic central unit (33) connected to the power supply source (32) and to the active protection system (20), and at least one electronic sensor (34) connected to the central unit (33), the trigger device (31) having an active mode in which the sensor (34) is configured to measure a driving parameter (Pc) of the vehicle (1) varying as a function of driving conditions of the vehicle (1), and the central unit (33) is configured to switch the active protection system (20) from the standby mode to the protection mode when the driving parameter (Pc) exceeds a trigger threshold (Sd) representing a situation involving an accident,
the vehicle equipment (10) being **characterised in that** the trigger device (31) has an inactive mode in which said trigger device (31) remains as long as the driving parameter (Pc) is below an activation threshold (Sa), the activation threshold (Sa) being below the trigger threshold (Sd),
and **in that** the actuating system (30) comprises an activation device (35) configured to detect when the driving parameter (Pc) exceeds the activation threshold (Sa) and switch the trigger device (31) from the inactive mode to the active mode when the driving parameter (Pc) exceeds the activation threshold (Sa).

2. Vehicle equipment (10) as claimed in claim 1, wherein the trigger device (31) is configured to measure a period during which said trigger device (31) is in the active mode and to switch from the active mode to the inactive mode if the period exceeds a given activation period.

3. Vehicle equipment (10) as claimed in any one of claims 1 to 2, wherein the activation device (35) comprises an inertial sensor (36) and a connector (37) connected to the trigger device (31), the inertial sensor (36) comprising an activation member (38) biased into a retracted position at a distance from the connector (37) and displaceable into an activation position in which said activation member (38) is in contact with the connector (37) so as to switch the trigger device (31) from the inactive mode to the active mode, the inertial sensor (36) being configured so that the activation member (38) is in the activation position when the driving parameter (Pc) exceeds the activation threshold (Sa).

4. Vehicle equipment (10) as claimed in any one of claims 1 to 2, wherein the activation device (35) comprises a low-consumption electronic accelerometer configured to measure an acceleration of the vehicle as the driving parameter (Pc).

5. Vehicle equipment (10) as claimed in any one of claims 1 to 4, wherein the sensor (34) of the trigger device (31) is an electronic accelerometer configured to measure an acceleration of the vehicle as the driving parameter (Pc).

6. Vehicle equipment (10) as claimed in any one of claims 1 to 5, wherein the active protection system (20) comprises at least one inflatable cushion (21), the inflatable cushion (21) being folded when the active protection system (20) is in the standby mode and deployed when the active protection system (20) is in the protection mode.

7. Vehicle equipment (10) as claimed in any one of claims 1 to 6, wherein the active protection system (20) comprises at least one safety belt and a tensioning device configured to leave the safety belt free when the active protection system (20) is in the standby mode and to block or tension the safety belt when the active protection system (20) is in the protection mode.

8. Vehicle equipment (10) as claimed in any one of claims 1 to 7, wherein the actuating system (30) comprises at least one presence-detecting sensor connected to the central unit (33) of the trigger device (31) and configured to detect a presence of the user (7) in the space, the central unit (33) being configured to switch the active protection system (20) from the standby mode to the protection mode also when the presence of the user (7) in the space is detected.

9. Vehicle equipment (10) as claimed in any one of claims 1 to 8, wherein the actuating system (30) comprises at least one attachment-detecting sensor connected to the central unit (33) of the trigger device (31) and configured to detect that the vehicle equipment (10) has been attached to the vehicle (1), the central unit (33) being configured to switch the active protection system (20) from the standby mode to the protection mode also when the attachment of the vehicle equipment (10) to the vehicle (1) is detected.

10. Vehicle (1) comprising a vehicle equipment (10) as claimed in any one of claims 1 to 9 removably mounted in the vehicle (1) in the vicinity of a space intended to accommodate a user (7).
